# EUROPÄISCHE PATENTANMELDUNG

(11) **EP 4 742 519 A1**
(43) Veröffentlichungstag der Anmeldung: **13.05.2026**
(21) Anmeldenummer: 25215063.6
(22) Anmeldetag: 11.11.2025
(51) Int. Cl.: H02K 49/06, H02K 49/10

(54) **DREHMOMENTÜBERTRAGER**

(30) Priorität: 12.11.2024 AT 508952024
(71) Anmelder: nengineering GmbH, 1230 Wien (AT)
(72) Erfinder: Neugebauer, Christian, 1230 Wien (AT)
(74) Vertreter: SONN Patentanwälte GmbH & Co KG

(57) **Zusammenfassung**

Bei einem Drehmomentübertrager umfassend einen mit einer Magnetfeldquelle (8,11) versehenen ersten Teil (2) und einen relativ zum ersten Teil (2) drehbar gelagerten zweiten Teil (1) aus einem Magnetwerkstoff, weist der erste Teil (2) einen radial inneren Abschnitt (4) und einen radial äußeren Abschnitt (3) auf, wobei der radial äußere und/oder der radial innere Abschnitt (3, 4) in umfangsmäßigem Abstand voneinander angeordnete erste Segmente (10) aufweist und zwischen dem radial inneren und dem radial äußeren Abschnitt (3, 4) des ersten Teils (2) zweite Segmente (5) des zweiten Teils (1) angeordnet sind, die in radiale Überdeckung mit den ersten Segmenten (10) bringbar sind, sodass ein von der Magnetfeldquelle (8, 11) ausgehendes, zwischen dem radial äußeren und dem radial inneren Abschnitt (3, 4) bestehendes Magnetfeld ein von der Überdeckung zwischen den ersten und zweiten Segmenten (5, 10) abhängiges Dreh- oder Haltemoment auf den zweiten Teil (1) ausübt

## Beschreibung

Die Erfindung betrifft einen Drehmomentübertrager umfassend einen mit einer Magnetfeldquelle versehenen ersten Teil und einen relativ zum ersten Teil drehbar gelagerten zweiten Teil aus einem Magnetwerkstoff.

Drehmomentübertrager werden in schaltbarer Ausführung und in nicht schaltbarer Ausführung zwischen zwei drehenden Elementen als Kupplungen eingesetzt, und zwischen einem starren und einem drehenden Element als Bremsen. In einer schaltbaren Ausführung mit bevorzugter Ausrichtung der Elemente werden Drehmomentübertrager auch als Drehantrieb für begrenzte Winkel (Limited Angle Torquer "LAT") eingesetzt.

Drehmomentübertrager sind mit berührender Verbindung zwischen den drehenden Elementen als starre Kupplungen, elastische Kupplungen oder Reibkupplungen bekannt.

Drehmomentübertrager mit berührungsloser Verbindung zwischen den drehenden Elementen sind als Magnetkupplung bekannt, wobei eines der Elemente mit einem Permanentmagneten oder einem Elektromagneten, gebildet aus einer Spule und einem Körper aus weichmagnetischem Material ausgeführt ist, und das andere Element entweder ebenfalls mit Magneten oder mit weichmagnetischem Material versehen ist. Die Drehmomentübertragung erfolgt bei den bekannten Ausführungen mittels magnetischer Kraftwirkung über einen axialen oder tangentialen Luftspalt zwischen diesen beiden Elementen.

Nachteilig an berührenden Drehmomentübertragern sind Verschleiß und Geräuschbildung. Nachteilig an bekannten magnetischen, berührungslosen Drehmomentübertragern sind ihre hohe Masse und ihr hohes Massenträgheitsmoment, bezogen auf das übertragbare Drehmoment.

Ziel der Erfindung ist es daher, einen Drehmomentübertrager zu schaffen, der ein Drehmoment zwischen zwei Elementen, von denen eines rotatorisch beweglich und das andere feststehend oder um dieselbe Ache rotatorisch beweglich ist, überträgt.

Weiters zielt die Erfindung darauf ab, die folgenden Vorgaben zumindest teilweise zu erfüllen
- Der Drehmomentübertrager soll nicht schaltbar oder schaltbar ausführbar sein.
- Der Drehmomentübertrager soll zwischen den Elementen berührungslos sein.
- Für elektrisch schaltbare Ausführungen soll eine elektrisch redundante Ausführung möglich sein.
- Der Drehmomentübertrager soll hohes Drehmoment bei limitiertem Durchmesser übertragen können.
- Geringes Massenträgheitsmoment.
- Geringe Teilezahl und kostengünstiger Aufbau.
- Kein Schlupf, d.h. ein Übertragungsverhältnis 1:1.
- Das Drehmomentlimit soll konstruktiv einstellbar sein. Weiters soll der Drehmomentverlauf über den Drehwinkel konstruktiv einstellbar sein, insbesondere wird für den Einsatz als Drehantrieb ein über weite Winkelbereiche etwa konstantes Drehmoment angestrebt, während für den Einsatz als Kupplung ein hohes Spitzendrehmoment bei kleinem Verdrehwinkel, und somit hohe Verdrehsteifigkeit angestrebt wird.
- Das Drehmomentenlimit soll ohne konstruktive Änderung der Teile durch axiale Verschiebung der Elemente zueinander einstellbar sein.
- Der Drehmomentübertrager soll als Kupplung, Bremse oder Drehantrieb mit limitiertem Drehwinkel einsetzbar sein.

Zur Lösung dieser Aufgabe ist bei einem Drehmomentübertrager der eingangs genannten Art im Wesentlichen vorgesehen, dass der erste Teil einen radial inneren Abschnitt und einen radial äußeren Abschnitt aufweist, wobei der radial äußere und/oder der radial innere Abschnitt in umfangsmäßigem Abstand voneinander angeordnete erste Segmente aufweist und radial zwischen dem radial inneren und dem radial äußeren Abschnitt des ersten Teils zweite Segmente des zweiten Teils angeordnet sind, die in radiale Überdeckung mit den ersten Segmenten bringbar sind, sodass ein von der Magnetfeldquelle ausgehendes, zwischen dem radial äußeren und dem radial inneren Abschnitt bestehendes Magnetfeld ein von der Überdeckung zwischen den ersten und zweiten Segmenten abhängiges Dreh- oder Haltemoment auf den zweiten Teil ausübt.

Im erfindungsgemäßen Drehmomentübertrager ist der zweite Teil des Drehmomentübertragers daher mit zumindest einem zweiten Segment ausgebildet, der als Mitnehmer zwischen zwei Luftspalten zwischen dem radial inneren und dem radial äußeren Abschnitt des ersten Teils angeordnet ist. Der Mitnehmer ist beispielsweise aus weichmagnetischem Werkstoff ausgeführt und in Umfangsrichtung geteilt. Der radial innere Abschnitt des ersten Teils und der radial äußere Abschnitt des ersten Teils können ebenfalls aus weichmagnetischem Werkstoff ausgeführt sein. Zumindest einer der Abschnitte des ersten Teils ist zur Ausbildung der ersten Segmente in Umfangsrichtung geteilt. Zwischen dem radial inneren Abschnitt und dem radial äußeren Abschnitt besteht ein magnetisches Feld. Die Übertragung des Drehmomentes erfolgt durch die Tangentialkomponenten der magnetischen Kraft zwischen den Elementen an mindestens einem der beiden Luftspalte.

Das magnetische Feld zwischen dem radial inneren Abschnitt und dem radial äußeren Abschnitt des ersten Teils kann bevorzugt dadurch erzeugt werden, dass in einem ringförmigen Spalt zwischen dem radial inneren Abschnitt und dem radial äußeren Abschnitt die Magnetfeldquelle angeordnet ist. Das magnetische Feld kann beispielsweise durch einen zwischen diesen Abschnitten angeordneten Permanentmagneten erzeugt werden oder durch zumindest eine stromdurchflossene, in tangentialer Richtung gewickelten Spule. Wird das magnetische Feld durch eine stromdurchflossene Spule aufgebracht, so ist die Drehmomentübertragung durch Reduktion des Stromflusses im Ausmaß reduzierbar, und durch Unterbrechnung des Stromflusses abschaltbar.

Mit dem Einsatz von zwei separaten, gleichsinnig gewickelten Spulen kann eine elektrische Redundanz erzielt werden.

Die erfindungsgemäße Ausbildung ermöglicht es, auf die Anordnung einer Magnetfeldquelle am radial äußeren Abschnitt des ersten Teils zu verzichten. Da an diesem radial äußeren Abschnitt im Bereich des Luftspaltes weder Permanentmagnete noch Spulen angeordnet sein müssen, ist dieser dünnwandig ausführbar, sodass bei vorgegebenem Außendurchmesser des Drehmomentübertragers ein hoher Radius des äußeren Luftspalts erzielt wird. Auch am zweiten Teil müssen weder Permanentmagnete noch Spulen angeordnet sein, sodass auch für den inneren Luftspalt ein hoher Radius erzielbar ist. Der hohe Radius bewirkt einen großen Umfang, und dieser ermöglicht eine große Anzahl von Teilungen, deren Mindestdimension in Umfangsrichtung durch Fertigbarkeit, Steifigkeit und gegenseitige Beeinflussung der Magnetfelder bestimmt ist. Eine bevorzugte Ausführung der Erfindung sieht in diesem Zusammenhang vor, dass die ersten und die zweiten Segmente eine identische umfangsmäßige Teilung aufweisen. Dies bedeutet, dass die ersten Segmente einerseits und die zweiten Segmente andererseits in gleicher Anzahl und vorzugsweise auch in gleichem umfangsmäßigem Abstand voneinander angeordnet sind. Wenn die Anzahl der zweiten Segmente am zweiten Teil und die Anzahl der ersten Segmente an zumindest einem der radial inneren und radial äußeren Abschnitte des ersten Teils ident sind, ist eine eindeutige Vorzugslage zwischen dem ersten und dem zweiten Teil gegeben. Weiters beträgt das Übertragungsverhältnis dadurch 1:1 und es tritt kein Schlupf auf.

Bevorzugt beträgt die Anzahl der ersten bzw. zweiten Segmente jeweils mindestens zwei. Beispielhafte Ausführungen umfassend 3, 4, 5, 6, 7, 8, 9 oder 10 erste bzw. zweite Segmente.

Das übertragbare Drehmoment ist bei der erfindungsgemäßen Ausbildung proportional zu den Tangentialkraftkomponenten der Magnetkräfte, zu ihrem Radius und ihrer Anzahl, d.h. zur Anzahl der ersten bzw. zweiten Segmente. Der Radius und die Anzahl der Segmente werden aufgrund der beschriebenen Dünnwandigkeiten innerhalb des diametral limitierten Bauraums maximiert, und damit auch das übertragbare Drehmoment.

Weiters trägt diese Dünnwandigkeit zu geringem Massenträgheitsmoment der drehmomentübertagenden Bereiche, die sich im Bereich der Luftspalte befinden, bei. Die permanentmagnetischen Bereiche oder die Spulen können ohne Verringerung des übertragbaren Drehmoments zur weiteren Absenkung des Massenträgheitsmoments auf kleinem Durchmesser angeordnet werden.

Der zweite Teil des erfindungsgemäßen Drehmomentübertragers besteht aus einem Bauelement, das vorzugsweise einstückig ausgeführt ist.

Der radial innere Abschnitt und der radial äußere Abschnitt des ersten Teils des Drehmomentübertragers sind vorzugsweise jeweils zylindermantelförmig ausgebildet. In einer Ausführung, in der das magnetische Feld mit einer Spule erzeugt wird, können der radial innere Abschnitt und der radial äußere Abschnitt durch einen radialen Verbindungsabschnitt miteinander verbunden sein, sodass eine einstückige Ausführung erreicht wird. Alternativ können der radial innere Abschnitt und der radial äußere Abschnitt durch die dazwischen angeordnete Magnetfeldquelle miteinander verbunden sein bzw. zusammengehalten werden.

Die ersten bzw. zweiten Segmente sind vorzugsweise prismatisch ausgeführt.

Der Drehmomentübertrager kann aufgrund der geringen Teilezahl und aufgrund der fertigungsgerechten Ausformung der Teile durch Dreh-, Fräs- oder Drahterosionsverfahren kostengünstig hergestellt werden.

Die Höhe des aufgebrachten Drehmomentes zwischen dem ersten und dem zweiten Teil ist vom relativen Verdrehwinkel der Teile zueinander abhängig. Eine Abhängigkeit der Höhe des Drehmomentes vom Verdrehwinkel kann durch eine Profilierung der ersten bzw. zweiten Segmente erreicht werden. Eine rechteckförmige Profilierung führt dabei zu einem steilen Anstieg des Drehmoments über einen kleinen Verdrehwinkel, und somit zu einer hohen Verdrehsteifigkeit, während eine gekurvte Profilierung der ersten und/oder der zweiten Segmente zu einem flachen Anstieg des Drehmoments über den Verdrehwinkel führt. Die Form der Kurve der gekurvten Profilierung bestimmt den Verlauf des Drehmomentanstiegs über den Verdrehwinkel. Eine bevorzugte Ausbildung des Drehmomentübertragers sieht in diesem Zusammenhang vor, dass die ersten Segmente in Umfangsrichtung beiderseits von rampenförmigen Übergangsabschnitten begrenzt sind, die eine vom Drehwinkel abhängige axiale Überdeckung mit den zweiten Segmenten definierende Steigung aufweisen. Bei einer weiteren Variante der Erfindung kann vorgesehen sein, dass zumindest ein erstes Segment, vorzugsweise mehrere erste Segmente, insbesondere alle ersten Segmente, jeweils in Umfangsrichtung betrachtet an nur einer Seite von einem rampenförmigen Übergangsabschnitt begrenzt ist/sind. Ein solcher Übergangsabschnitt kann eine vom Drehwinkel abhängige axiale Überdeckung mit einem zweiten Segment definierende Steigung aufweisen. Zusätzlich oder alternativ kann auch vorgesehen sein, dass zumindest ein zweites Segment, vorzugsweise mehrere zweite Segmente, insbesondere alle zweiten Segmente, jeweils in Umfangsrichtung betrachtet von einem rampenförmigen Übergangsabschnitt begrenzt ist/sind.

Eine Schwächung des Drehmomentes kann durch Verminderung der Überdeckung der Segmente erzielt werden. Damit ist eine Justage des Drehmomentes ohne mechanische Veränderung der Elemente lediglich durch axiale Verschiebung der Elemente zueinander möglich. Eine bevorzugte Ausbildung des Drehmomentübertragers sieht in diesem Zusammenhang vor, dass der zweite Teil in axialer Richtung verstellbar ist, um das axiale Ausmaß der Überdeckung zwischen den ersten und zweiten Segmenten zu verändern.

Sind der erste und der zweite Teil an koaxialen Wellen angeordnet, dient der Drehmomentübertrager als Kupplung. Ist einer der Teile, vorzugsweise der erste Teil feststehend, so dient der Drehmomentübertrager als Bremse, oder in einer Ausführung, in dem das magnetische Feld durch eine Spule erzeugt wird, als Drehantrieb mit limitiertem Drehwinkel.

Eine konstruktiv besonders einfache Bauweise ergibt sich in Übereinstimmung mit einer bevorzugten Ausführung der Erfindung dadurch, dass der zweite Teil eine U-Form aufweist, deren parallele U-Schenkel die zweiten Segmente ausbilden. Bei einer Ausführungsform ist möglich, dass der erste Teil eine U-Form aufweist, deren parallele U-Schenkel die ersten Segmente ausbilden. Insbesondere ist hierbei vorgesehen, dass die zweiten Segmente in einer mit den ersten Segmenten überdeckenden Drehlage zwischen den ersten Segmenten des radial äußeren Abschnitts und den ersten Segmenten des radial inneren Abschnitts angeordnet sind.

Bei einer Ausführungsform der Erfindung kann vorgesehen sein, dass sich die ersten Segmente und/oder die zweiten Segmente parallel zu einer Drehachse des Drehmomentübertrages erstrecken. Auf diese Weise ergibt sich eine hinsichtlich der Breite des Drehmomentübertragers kompakte Ausgestaltung des Drehmomentübertrages. Die Drehachse ist bevorzugt eine Achse, um die sich der zweite Teil relativ zu dem ersten Teil drehen kann. Günstig ist, wenn die Drehachse mit einer Haupterstreckungsachse des Drehmomentübertrages in eine Längsrichtung desselben zusammenfällt. Bei der Haupterstreckungsachse in die Längsrichtung des Drehmomentübertrages kann es sich auch um eine Symmetrieachse des Drehmomentübertrages handeln. Die ersten und/oder zweiten Segmente können beispielsweise von einem vorzugsweise oberseitigen Rand des ersten bzw. zweiten Teils abstehen. Möglich ist aber auch, dass sich die ersten Segmente und/oder die zweiten Segmente quer zu einer Drehachse des Drehmomentübertrages radial erstrecken und von dem ersten bzw. zweiten Teil abstehen. Bei einer beispielhaften Variante der Erfindung erstrecken sich die ersten Segmente parallel zu der Drehachse und die zweiten Segmente quer zu der Drehachse.

Weitere Merkmale und Vorteile der Erfindung ergeben sich aus der nachfolgenden Beschreibung von bevorzugten, den Schutzbereich nicht beschränkenden, Ausführungsbeispielen der Erfindung unter Bezugnahme auf die angeschlossenen Zeichnungen.

Es zeigen Fig. 1 eine perspektivische Ansicht und Fig. 2 eine Schnittdarstellung einer schaltbaren Ausführung des Drehmomentübertragers in ausgelenkter Stellung, Fig. 3 eine perspektivische Ansicht und Fig. 4 eine Schnittdarstellung einer nicht schaltbaren Ausführung des Drehmomentübertragers in Mittelstellung.

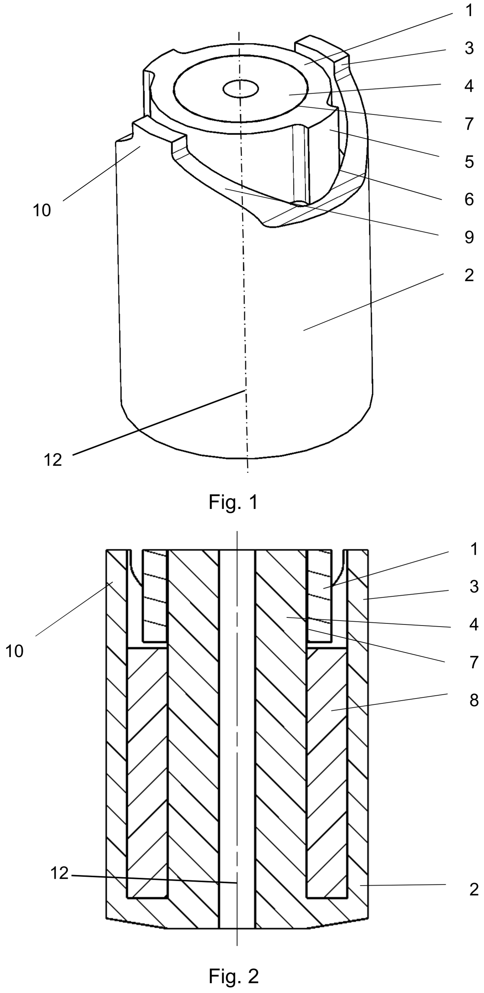

Wie in Fig. 1 und 2 gezeigt, weist eine schaltbare Ausführung des Drehmomentübertragers einen zweiten Teil 1 und einen ersten Teil 2 auf, der aus weichmagnetischem Material besteht. Der erste Teil 2 besteht aus einem radial äußeren Abschnitt 3 und einem radial inneren Abschnitt 4. Diese Abschnitte bestehen ebenfalls aus weichmagnetischem Material. Der zweite Teil 1 weist zweite Segmente 5 auf und der erste Teil 2 weist erste Segmente 10 auf. Zwischen den zweiten Segmenten 5 des zweiten Teils 1 und den ersten Segmenten 10 besteht ein Luftspalt 6. Zwischen dem zweiten Teil 1 und dem radial inneren Abschnitt 4 des ersten Teils 2 besteht ein weiterer Luftspalt 7.

Die zweiten Segmente 5 und ersten Segmente 10 sind mit identischer Teilung in Umfangsrichtung ausgeführt.

Zwischen dem radial äußeren Abschnitt 3 und dem radial inneren Abschnitt 4 des ersten Teils 2 ist eine in tangentialer Richtung gewickelte Spule 8 aus Kupferlackdraht angeordnet.

Durch Bestromen der Spule 8 baut sich ein magnetisches Feld zwischen dem radial äußeren Abschnitt 3 und dem radial inneren Abschnitt 4 des ersten Teils 2 auf, das eine Ausrichtung der zweiten Segmente 5 des zweiten Teils 1 zu den ersten Segmenten 10 des radial äußeren Abschnitts 3 anstrebt, und einer Verdrehung des zweiten Teils 1 gegenüber dem ersten Teil 2 ein Drehmoment entgegensetzt. Die Verdrehung des zweiten Teils 1 gegenüber dem ersten Teil 2 kann um die Drehachse 12 erfolgen.

Die ersten Segmente 10 des radial äußeren Abschnitts 3 sind kurvig profiliert. Die beispielhaft gezeigte Profilierung 9 verursacht ein etwa konstantes Drehmoment über einen weiten Verdrehbereich zwischen dem zweiten Teil 1 und dem ersten Teil 2 wie sie für Drehantriebe mit limitierten Drehwinkel gewünscht sind. Die symmetrische Ausführung der Profilierung 9 führt zu symmetrischen Drehmomentkurven in beiden Verdrehrichtungen, und ermöglicht aufgrund der gewählten drehsymmetrischen und normal zur Drehachse prismatischen Bauteilform des radial äußeren Abschnitts 3 eine einfache Fertigung dieses Teils.

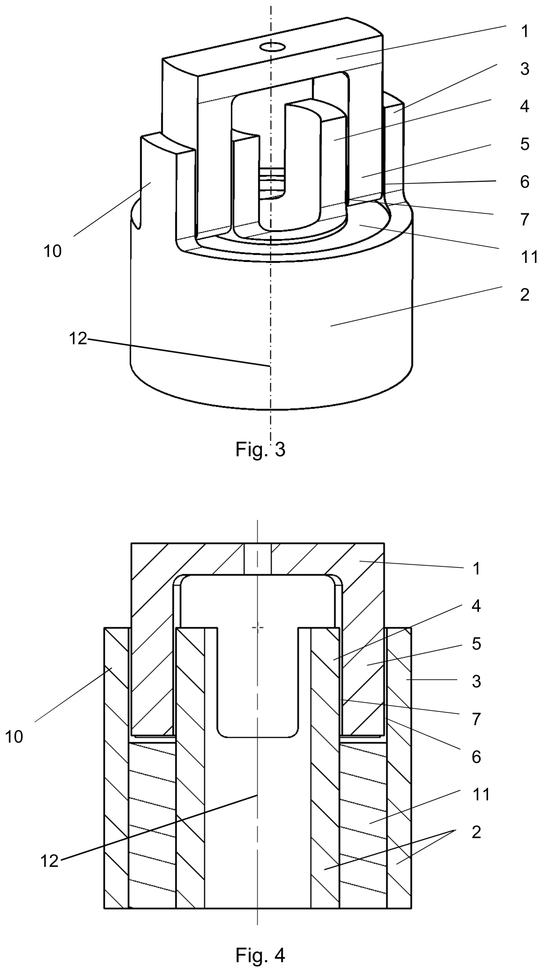

Wie in den Fig 3 und 4 gezeigt, weist eine nicht schaltbare Ausführung des Drehmomentübertragers einen zweiten Teil 1 und einen ersten Teil 2 auf, der aus einem radial äußeren Abschnitt 3, einem inneren, in radialer Richtung magnetisierten ringförmigen Permanentmagneten 11 und einem radial inneren Abschnitt 4 besteht. Der zweite Teil 1, der radial äußere Abschnitt 3 und der radial innere Abschnitt 4 bestehen aus weichmagnetischem Material. Zwischen den zweiten Segmenten 5 des zweiten Teils 1 und dem radial äußeren Abschnitt 3 besteht ein Luftspalt 6. Zwischen den zweiten Segmenten 5 des zweiten Teils 1 und dem radial inneren Abschnitt 4 des ersten Teils 2 besteht ein weiterer Luftspalt 7.

Die zweiten Segmente 5 des zweiten Teils 1, der radial innere Abschnitt 4 und der radial äußere Abschnitt 3 des ersten Teils 2 sind jeweils mit zwei ersten Segmenten in gleich großer Umfangsteilung ausgeführt, wobei die Segmente am radial inneren Abschnitt 4 und am radial äußeren Abschnitt 3 in gleichen Winkellagen angeordnet sind.

Zwischen dem radial äußeren Abschnitt 3 und dem radial inneren Abschnitt 4 des ersten Teils 2 ist ein in radialer Richtung magnetisierter ringförmiger Permanentmagnet 11, der beispielsweise aus Neodym-Eisen-Bor besteht, angeordnet.

Der Permanentmagnet 11 bewirkt zwischen dem radial äußeren Abschnitt 3 und dem radial inneren Abschnitt 4 des ersten Teils 2 ein Magnetfeld, das eine Ausrichtung der zweiten Segmente 5 des zweiten Teils 1 zu den ersten Segmenten 10 des ersten Teils 2 anstrebt, und einer Verdrehung des zweiten Teils 1 gegenüber dem ersten Teil 2 ein Drehmoment entgegensetzt.

Die ersten Segmente 10 des radial äußeren Abschnitts 3 sind rechteckförmig ausgeführt. Diese Form verursacht ein hohes Spitzendrehmoment über einen kleinen Verdrehbereich zwischen dem zweiten Teil 1 und dem ersten Teil 2 und führt somit zu einer hoher Verdrehsteifigkeit wie sie für Wellenkupplungen erwünscht ist.

Die ersten Segmente 10 und/oder die zweiten Segmente 5 können sich parallel zu der Drehachse 12 des Drehmomentübertrages erstrecken (siehe insbesondere Fig. 3). Dabei können die ersten Segmente 10 und/oder die zweiten Segmente 5 von einem vorzugsweise oberseitigen Rand des ersten 2 bzw. zweiten Teils 1 abstehen. Bei einer anderen Variante können die zweiten Segmente 5 aber auch quer zu der Drehachse 12 von dem zweiten Teil 1 radial abstehen (siehe Fig. 1).

## Patentansprüche

1. Drehmomentübertrager umfassend einen mit einer Magnetfeldquelle (8, 11) versehenen ersten Teil (2) und einen relativ zum ersten Teil (2) drehbar gelagerten zweiten Teil (1) aus einem Magnetwerkstoff, **dadurch gekennzeichnet, dass** der erste Teil (2) einen radial inneren Abschnitt (4) und einen radial äußeren Abschnitt (3) aufweist, wobei der radial äußere und/oder der radial innere Abschnitt (3, 4) in umfangsmäßigem Abstand voneinander angeordnete erste Segmente (10) aufweist und zwischen dem radial inneren und dem radial äußeren Abschnitt (3, 4) des ersten Teils (2) zweite Segmente (5) des zweiten Teils (1) angeordnet sind, die in radiale Überdeckung mit den ersten Segmenten (10) bringbar sind, sodass ein von der Magnetfeldquelle (8,11)ausgehendes, zwischen dem radial äußeren und dem radial inneren Abschnitt (3, 4) bestehendes Magnetfeld ein von der Überdeckung zwischen den ersten und zweiten Segmenten (5, 10) abhängiges Dreh- oder Haltemoment auf den zweiten Teil (1) ausübt.

2. Drehmomentübertrager nach Anspruch 1, **dadurch gekennzeichnet, dass** die ersten und die zweiten Segmente (5, 10) eine identische umfangsmäßige Teilung aufweisen.

3. Drehmomentübertrager nach Anspruch 1 oder 2, **dadurch gekennzeichnet, dass** die ersten Segmente (10) in Umfangsrichtung einerseits oder beiderseits von rampenförmigen Übergangsabschnitten (9) begrenzt sind, die eine vom Drehwinkel abhängige axiale Überdeckung mit den zweiten Segmenten (5) definierende Steigung aufweisen.

4. Drehmomentübertrager nach Anspruch 1, 2 oder 3, **dadurch gekennzeichnet, dass** in einem ringförmigen Spalt zwischen dem radial inneren Abschnitt (4) und dem radial äußeren Abschnitt (3) die Magnetfeldquelle angeordnet ist.

5. Drehmomentübertrager nach einem der Ansprüche 1 bis 4, **dadurch gekennzeichnet, dass** der zweite Teil (1) in axialer Richtung verstellbar ist, um das axiale Ausmaß der Überdeckung zwischen den ersten und zweiten Segmenten (5, 10) zu verändern.

6. Drehmomentübertrager nach einem der Ansprüche 1 bis 5, **dadurch gekennzeichnet, dass** der erste (2) und/oder zweite Teil (1) eine U-Form aufweist, deren parallele U-Schenkel die zweiten Segmente (5) ausbilden.

7. Drehmomentübertrager nach einem der Ansprüche 1 bis 6, **dadurch gekennzeichnet, dass** die zweiten Segmente (5) in einer mit den ersten Segmenten (10) überdeckenden Drehlage zwischen den ersten Segmenten (10) des radial äußeren Abschnitts (3) und den ersten Segmenten des radial inneren Abschnitts (4) angeordnet sind.

8. Drehmomentübertrager nach einem der Ansprüche 1 bis 7, **dadurch gekennzeichnet, dass** sich die ersten Segmente (10) und/oder die zweiten Segmente (5) parallel zu einer Drehachse (12) des Drehmomentübertrages erstrecken.
